# EUROPEAN PATENT APPLICATION

(11) **EP 2 804 084 A1**
(43) Date of publication of application: **19.11.2014**
(21) Application number: 14167056.2
(22) Date of filing: 05.05.2014
(51) Int. Cl.: G06F 3/0481, H04N 5/44, H04N 21/422

(54) **Remote control method and remote control system of image display apparatus**

(30) Priority: 14.05.2013 JP 2013102261
(71) Applicant: Funai Electric Co., Ltd., Daito-shi, Osaka 574-0013 (JP)
(72) Inventor: Shimizu, Yoshiharu, Osaka, 574-0013 (JP)
(74) Representative: Manitz, Finsterwald & Partner GbR

(57) **Abstract**

A remote control method includes the steps of connecting an image display apparatus (100) with an external control device (200) so as to associate a display region (Ap) of a display unit (101) with a detection region (Sa) of a detection unit (201), displaying an operation image associated with an operation of the image display apparatus (100) on the display unit (101), and executing the operation associated with the operation image displayed in the display region corresponding to a region in which contact action of the pointer (P) is detected, when the detection unit (201) detects contact action of the pointer (P) operated by an operator.

## Description

### BACKGROUND OF THE INVENTION

### 1. Field of the Invention

The present invention relates to a remote control method of an image display apparatus including a display unit for displaying an image and a remote control system using the remote control method.

### 2. Description of Related Art

At present, in an image display apparatus such as a thin television set, a remote controller for performing remote control is usually used as an operation input device. In addition, recently, there are increasing remote controllers using a flat reading unit (touch panel) for reading contact (tap) and movement (slide) of a finger or the like (hereinafter may be generically referred to as a gesture). In addition, as a device equipped with a touch panel, there are widely used portable terminals such as a smart phone or a tablet PC, and it is proposed to use such a portable terminal as a substitute for the remote controller (for example, Patent Document 1 disclosed in JP-A-2011-44103).

Patent Document 1 describes a cellular phone (portable terminal) equipped with a display panel (touch panel) including a sensor for detecting contact of a pointer such as a user's finger, and a television set (image display apparatus) operated by the cellular phone. The cellular phone displays objects on the display panel based on object data set for each arbitrary object forming a GUI. Further, when the sensor detects contact of the pointer, the sensor sends to the television set an execution instruction for an operation assigned to the object displayed in a region including the touched part. Then, the television set executes a predetermined process based on the execution instruction.

In addition, as a device for detecting an operation input on the touch panel, there is an operation input detection device described in Patent Document 2 (disclosed in JP-A-2012-203563). The operation input detection device described in Patent Document 2 includes a touch panel device for detecting a contact state of a user's finger and a digital processing unit. Further, the operation input detection device detects a contact state of a user's finger (contact or not contact). If contact is detected, a movement (stroke) of the finger is detected, and a type of the stroke (for example, a point stroke as only contact, a linear stroke as a linear movement of the touching finger, a curved stroke as a movement along a curved line, or the like) is recognized.

However, in the structure of Patent Document 1 described above, the GUI is displayed on the display panel of the cellular phone, and the user touches the display unit in accordance with the display so as to send the execution instruction. Therefore, the user is required to view both a screen of the television set and the display panel of the cellular phone. This may cause user's fatigue due to changing of eye sight or missing of important scenes.

In addition, in case of the structure of Patent Document 2, the operation input detection device detects an operation (stroke) of a user's finger. Therefore, by assigning different execution instructions to different strokes, the user can perform the stroke without viewing the operation input detection device. On the other hand, a size, a shape, and the like of a stroke are usually different depending on user's age, gender, physical condition, and the like, and hence the stroke may not be correctly determined. For supporting this case, in the structure of Patent Document 2, user's strokes are input and enrolled in advance, so as to improve accuracy in detection of the stroke.

However, this structure is inconvenient because each user is required to enroll the strokes with efforts and time. In addition, the user is required to remember the strokes for performing specific execution instructions. Therefore, there may be a case where the user cannot perform correct operations until being accustomed to the operations.

### SUMMARY OF THE INVENTION

The present invention is made to solve the above-mentioned problem, and it is an object thereof to provide a remote control method and a remote control system of an image display apparatus which has a simple input method and enables intuitive and accurate operation input.

A remote control method according to an aspect of the present invention is a method for controlling an image display apparatus including a display unit for displaying an image by using an external control device including a panel detection unit for detecting contact of an object. The method includes the steps of connecting the image display apparatus with the external control device, so as to associate a display region of the display unit with a detection region of the detection unit, displaying an operation image associated with an operation of the image display apparatus on the display unit, and executing the operation associated with the operation image displayed in the display region corresponding to a region in which contact of the object is detected when the contact of the object is detected by the detection unit.

In the remote control method according to an aspect of the present invention, the detection unit of the external control device is associated with the display region of the display unit. The operation associated with the operation image displayed in the display region corresponding to a region of the detection unit contacted by the object is executed. Therefore, the operator can perform the remote control while keeping sight of the display unit.

In this way, it is possible to provide an intuitive and simple operation method for the operator. In addition, it is possible to perform correct remote control so that usability for the operator is improved.

In the remote control method according to an aspect described above, the detection region includes an operational region corresponding to the operation image, and when the object (pointer) contacting with the detection unit exceeds a boundary of the operational region, the operation associated with the operation image is performed in accordance with the action of the object. With this structure, the remote control is performed in accordance with the action of the pointer, and hence operation feeling of the operator can be enhanced. In addition, even if the operator cannot contact the pointer with the operational region corresponding to the region of the operation image assigned to the desired operation, the contact position can be corrected before the pointer exceeds the boundary of the operational region. In this way, wasteful action due to misoperation can be reduced so that usability can be enhanced.

In the remote control method according to an aspect described above, an action of the contact object (pointer) is estimated based on the operational region in which a contact action of the contact object is detected and the operation associated with the corresponding operation image, and a shape of the operational region is changed based on a result of the estimation. With this structure, the operation is executed when the pointer moves to a constant or substantially constant position in the movement direction. Therefore, the operator can perform the operation always in the same sense so that usability can be enhanced.

In the remote control method according to an aspect described above, when contact of the object (pointer) is detected, the operation image of the display unit is changed. With this structure, the operator can check whether or not the operation corresponding to the region currently contacted with the pointer is the desired operation by viewing the display unit. Therefore, it is not necessary to view the external control device, and hence usability for the operator can be enhanced.

In the remote control method according to an aspect described above, the display unit displays a plurality of the operation images, the detection region is divided into a plurality of operational regions corresponding to the operation images one to one. With this structure, when the operator contacts the pointer with the detection unit, it contacts with one of the operational regions so that the display unit responds in a certain way. Therefore, operation feeling for the operator can be enhanced so that usability can be improved.

In the remote control method according to an aspect described above, the detection region is divided into a plurality of operational regions, and when it is detected that the operational region in which contact of the object (pointer) is detected is changed, one of changing of the operation display image, starting of the remote control, and finishing the remote control is performed. With this structure, the operational regions can be disposed to be adjacent to each other. Therefore, wasteful action of the operator can be reduced so that usability can be improved.

### BRIEF DESCRIPTION OF THE DRAWINGS

Fig. 1 is a schematic diagram of a remote control system for remote control of an image display apparatus according to the present invention.
Fig. 2 is a block diagram illustrating an example of the remote control system for remote control of the image display apparatus illustrated in Fig. 1.
Fig. 3 is a flowchart illustrating an operation of the remote control system according to the present invention.
Fig. 4A is a diagram illustrating the image display apparatus and an external control device at timing in an early stage of the operation illustrated in Fig. 3.
Fig. 4B is a diagram illustrating the image display apparatus and the external control device at timing in the early stage of the operation illustrated in Fig. 3.
Fig. 4C is a diagram illustrating the image display apparatus and the external control device at timing in the early stage of the operation illustrated in Fig. 3.
Fig. 4D is a diagram illustrating the image display apparatus and the external control device at timing in the early stage of the operation illustrated in Fig. 3.
Fig. 5A is a diagram illustrating the image display apparatus and the external control device at timing in a later stage of the operation illustrated in Fig. 3.
Fig. 5B is a diagram illustrating the image display apparatus and the external control device at timing in the later stage of the operation illustrated in Fig. 3.
Fig. 5C is a diagram illustrating the image display apparatus and the external control device at timing in the later stage of the operation illustrated in Fig. 3.
Fig. 5D is a diagram illustrating the image display apparatus and the external control device at timing in the later stage of the operation illustrated in Fig. 3.
Fig. 6 is a block diagram illustrating an example of the remote control system for remote control of the image display apparatus.
Fig. 7 is a block diagram illustrating an example of the remote control system for remote control of the image display apparatus.
Fig. 8 is a flowchart illustrating an operation of the remote control system illustrated in Fig. 7.
Fig. 9 is a diagram illustrating an example of an operational region.
Fig. 10 is a diagram illustrating another example of the operational region.
Fig. 11 is a diagram illustrating still another example of the operational region.
Fig. 12 is a diagram illustrating a case where the operational region is changed for detecting a pointer operation input.
Fig. 13 is a diagram illustrating association between a display unit and a detection unit when a position of the external control device is changed between portrait and landscape.

### DETAILED DESCRIPTION OF THE PREFERRED EMBODIMENTS

Now, embodiments of the present invention are described with reference to the drawings.

### (First embodiment)

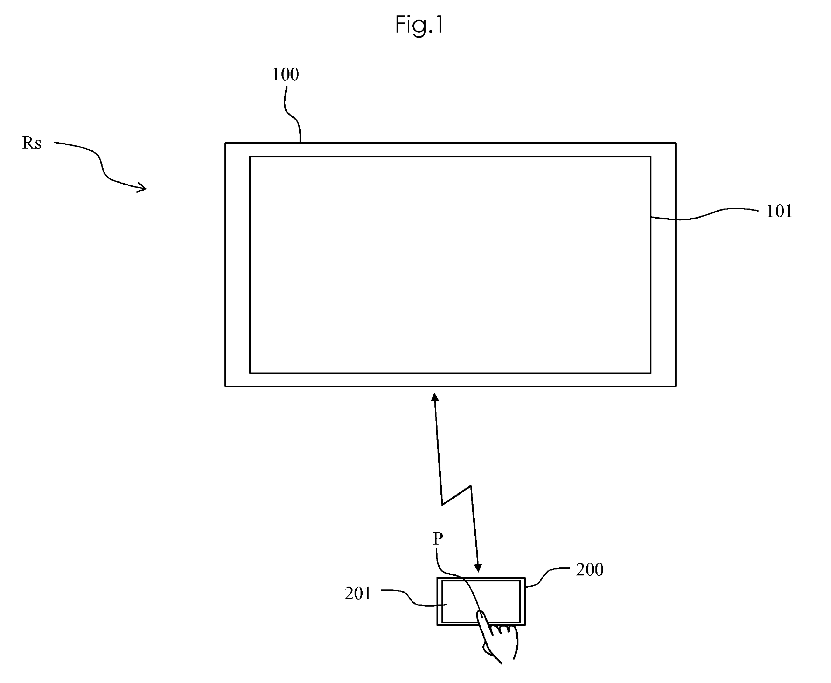

Fig. 1 is a schematic diagram of a remote control system for remote control of an image display apparatus according to the present invention. As illustrated in Fig. 1, a remote control system Rs includes a television set 100 as an example of the image display apparatus and a smart phone 200 as an example of an external control device. Note that the image display apparatus should include a display unit and should be connectable to the external control device. The image display apparatus may also be a personal computer, a projector, an audio device, or the like, for example. In addition, the external control device should be connectable to the image display apparatus 100, and may be a remote controller dedicated for the image display apparatus 100, a general-purpose remote controller, a tablet PC, or the like, for example.

As illustrated in Fig. 1, the television set 100 and the smart phone 200 are connected via wireless. Note that as a connection method between the television set 100 and the smart phone 200, there can be exemplified a method of using a radio wave (for example, wireless LAN or the like), a method of using light such as an infrared beam, but without limiting to these methods, various methods for communicating data (signal) can be used.

The television set 100 includes a display panel 101 as a display unit for displaying an image. As the display panel 101, there can be used a liquid crystal panel, a plasma display panel, an organic EL panel, or the like, which can display an image.

In addition, the smart phone 200 includes a touch panel 201 as a panel detection unit. The touch panel 201 is a detection unit for detecting contact of a pointer P (here, an operator's finger) and a movement (action) of the contacting pointer P. Note that the pointer P is the user's finger, but this is not a limitation. It is possible to use a pen-like contact tool (stylus pen) or the like. In addition, the touch panel 201 may utilize a sensor such as a pressure-sensitive type, a capacitive type, an optical type, or the like, whk7jich can detect contact of the pointer P and a movement of a part touched by the pointer P (hereinafter referred to as a movement of the pointer P or an action).

In the remote control system Rs, the operator uses the pointer P for performing input with the touch panel 201 of the smart phone 200 so as to perform operation (remote control) of the television set 100. Details of this remote control system Rs is described below with reference to the drawings.

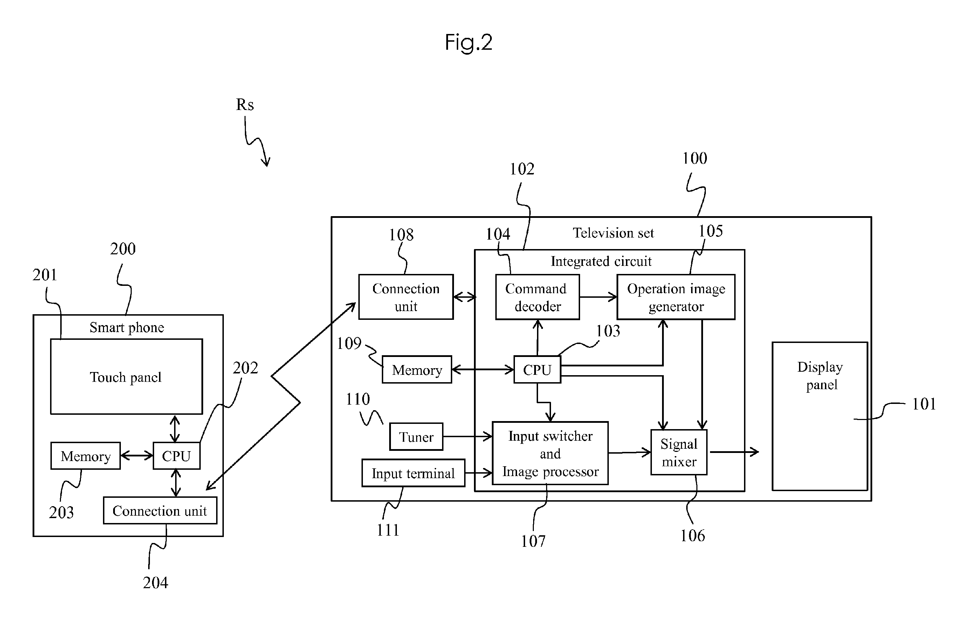

Fig. 2 is a block diagram illustrating an example of a remote control system for remote control of the image display apparatus illustrated in Fig. 1. The remote control system Rs illustrated in Fig. 2 has a structure in which operation information from the smart phone 200 is transmitted as an operation signal to the television set 100, and a menu screen to be displayed on the display panel 101 is generated in the television set 100.

As illustrated in Fig. 2, the television set 100 includes the display panel 101, an integrated circuit 102, a CPU 103, a command decoder 104, an operation image generator 105, a signal mixer 106, an input switcher and image processor 107, a connection unit 108, a memory 109, a tuner 110, and an input terminal 111.

The display panel 101 is a liquid crystal panel in this embodiment, and the entire surface of the display panel 101 is used as a display region. The integrated circuit 102 is a single chip in which a plurality of circuits are integrated. Note that the CPU 103, the command decoder 104, the operation image generator 105, the signal mixer 106, the input switcher and image processor 107 are included in the integrated circuit 102.

In addition, the connection unit 108 is a connecting device for communicating signals with a connection unit 204 (described later) of the smart phone 200 that is an external device and is the external control device in this embodiment. The connection unit 108 and the connection unit 204 are connected via wireless using a radio wave, infrared rays, or the like. Note that a wireless LAN is used for the connection in this embodiment, but this is not a limitation. In addition, the connection is not limited to the wireless connection but may be other connection using a cable, namely wired connection.

The connection unit 108 is connected to the integrated circuit 102 so as to receive a signal from the smart phone 200. Further, the connection unit 108 sends the received signal to the integrated circuit 102 (the command decoder 104). The signal received by the connection unit 108 contains positional information of a part touched with the pointer P on the touch panel 201 of the smart phone 200, movement information of the pointer P on the touch panel 201, and information of a control instruction (command) from the smart phone 200. The smart phone 200 transmits control information for operating individual portions of the television set 100 as a wireless signal.

Next, details of the integrated circuit 102 is described. The CPU 103 is a circuit performing calculation processing (information processing). As illustrated in Fig. 2, the CPU 103 controls the command decoder 104, the operation image generator 105, the signal mixer 106, and the input switcher and image processor 107 included in the integrated circuit 102.

The command decoder 104 extracts (decodes) the control instruction (command) for operating the devices constituting the television set 100 from the signal received from the connection unit 108. Then, the command decoder 104 transmits the decoded command to the device operating on the command (actually, a control circuit or the like for operating the device) in accordance with the instruction from the CPU 103. In addition, the command decoder 104 extracts position and action information of the pointer P from the signal received from the connection unit 108, and transmits the information to the operation image generator 105. Note that the command is sent to the operation image generator 105 when the remote control is started or a menu is changed.

The operation image generator 105 generates an operation display image based on the received position and action information of the pointer P or command. The operation display image includes an operation image corresponding to an action (as described later in detail). The operation display image is displayed on the display panel 101. As described later in detail, the operation display image is a menu image arranging a plurality of operation images corresponding to operations of the television set 100, or an image including an operation image indicating an operational state when a predetermined operation is performed.

In addition, the operation image generator 105 may generate an image including an action such that the operation display image is moved depending on the position and action information of the pointer P or the command. The operation image generator 105 transmits a signal of the generated operation display image to the signal mixer 106.

In addition, the integrated circuit 102 includes the input switcher and image processor 107. And connected to the tuner 110 and the input terminal 111 are connected to the input switcher and image processor 107. The tuner 110 is connected to an antenna (not shown) so that ground waves and satellite broadcasting waves such as BS and CS are received. Further, the signal received by the tuner 110 is processed in the input switcher and image processor 107 for decoding and the like, and is sent as an image signal to the signal mixer 106. On the other hand, the input terminal 111 is connected to an external image apparatus such as a DVD or a BD, and an image signal of the external image apparatus is sent to the input switcher and image processor 107 via the input terminal 111.

In addition, the input switcher and image processor 107 includes an input switch mechanism so that signal processing can be performed on either the signal from the tuner 110 or the signal from the input terminal 111. In other words, the signal from the tuner 110 is processed when there is a signal input from the tuner 110, and the signal from the input terminal 111 is processed when there is a signal input from the input terminal 111.

The signal mixer 106 mixes the operation display image sent from the operation image generator 105 and the image signal sent from the input switcher and image processor 107 as necessary so as to transmit the mixed signal to the display panel 101 (controller thereof). As a mixing method, for example, there is a method of mixing a translucent operation display image onto the image signal from the input switcher and image processor 107.

Further, if there is no operation display image from the operation image generator 105, the signal mixer 106 transmits the image signal from the input switcher and image processor 107 to the display panel 101, and hence the display panel 101 displays the image from the tuner 110 or the input terminal 111. On the contrary, if there is no image signal from the input switcher and image processor 107, the signal mixer 106 transmits the image signal of the operation display image from the operation image generator 105 to the display panel 101, and hence the display panel 101 displays the operation display image.

In addition, the television set 100 includes the memory 109. The memory 109 is a recorder for recording information. The memory 109 includes a volatile memory, a nonvolatile memory, or a combination thereof. As information recorded in the memory 109, for example, there are tuning information of the tuner 110, information of an image (for example, numerals, characters, graphics, and the like) used for generating the operation display image in the operation image generator 105, TV-program information received from the tuner, and the like. Further, the memory 109 can communicate information with the CPU 103.

In addition, the command decoder 104, the operation image generator 105, the signal mixer 106, and the input switcher and image processor 107 are disposed as individual circuits in the integrated circuit 102, but this structure is not a limitation. For instance, a part or a whole of them may be provided by programs executed by the CPU 103 or another processor. In the case where they are provided by programs, each program may be stored in the memory 109 or in a memory dedicated for programs disposed in the integrated circuit 102.

Next, the smart phone as an example of the external control device is described. As illustrated in Fig. 2, the smart phone 200 includes the touch panel 201, a central processing unit (CPU) 202, a memory 203, and the connection unit 204. Usually, the touch panel 201 of the smart phone 200 is integrated with the image display unit (not shown) (specifically, a touch sensor is disposed on an upper surface of the image display unit in the structure), on which an image is displayed so that a desired operation can be performed by touching the image with the pointer P. Note that the image on the image display unit is not necessary for remote control of the present invention. In the following description, it is supposed that no image is displayed on the image display unit or the same image is always displayed, unless otherwise noted.

In the smart phone 200, the entire surface of the touch panel 201 is used as a detection region for detecting a pointer P (here, an operator's finger). The touch panel 201 is a detection unit for detecting a contact of the pointer P. The touch panel 201 detects coordinates (position) at which the pointer P contacts and sends information of the detection with contact time information to the CPU 202.

The CPU 202 determines whether or not the pointer P is moving and the direction of movement if moving based on the position information and the time information. Further, on the basis of the pointer P position and movement, the CPU 202 generates the control information for controlling the television set 100. Note that details of the control information are described later.

In addition, the CPU 202 makes association between a display region of the display panel 101 of the television set 100 and the detection region in which contact action of the pointer P with the touch panel 201 can be detected. Further, the CPU 202 also has a function of forming an operational region in the detection region of the touch panel 201. Then, the CPU 202 recognizes the operation display image displayed currently on the display panel 101 and forms the operational region so that the action included in the operation display image corresponds to the related operation image. Note that details of the operational region are described later.

Further, the CPU 202 determines whether or not the pointer P is within the operational region, and in addition whether or not the pointer P has crossed a boundary of the operational region, based on the positional information of the pointer P from the touch panel 201. Then, the CPU 202 recognizes the operation of the television set 100 desired by the operator based on positional and movement information (hereinafter referred to as a contact action information) of the pointer P, and generates the control information for performing the operation. Further, the CPU 202 sends the contact action information of the pointer P and the control information as a signal to the connection unit 204.

Then, the CPU 202 sends the signal containing the contact action information of the pointer P and the control information to the connection unit 204. The connection unit 204 converts the signal from the CPU 202 into the wireless signal (such as the radio wave or the infrared signal) and transmits the wireless signal to the connection unit 108 of the television set 100.

The CPU 202 is connected to the memory 203. The memory 203 is a recorder for recording information similarly to the memory 109 of the television set 100, and includes a volatile memory, a nonvolatile memory, or a combination thereof. The information recorded in the memory 203 includes information of the operational region (such as information of the boundary dividing the display region into operational regions).

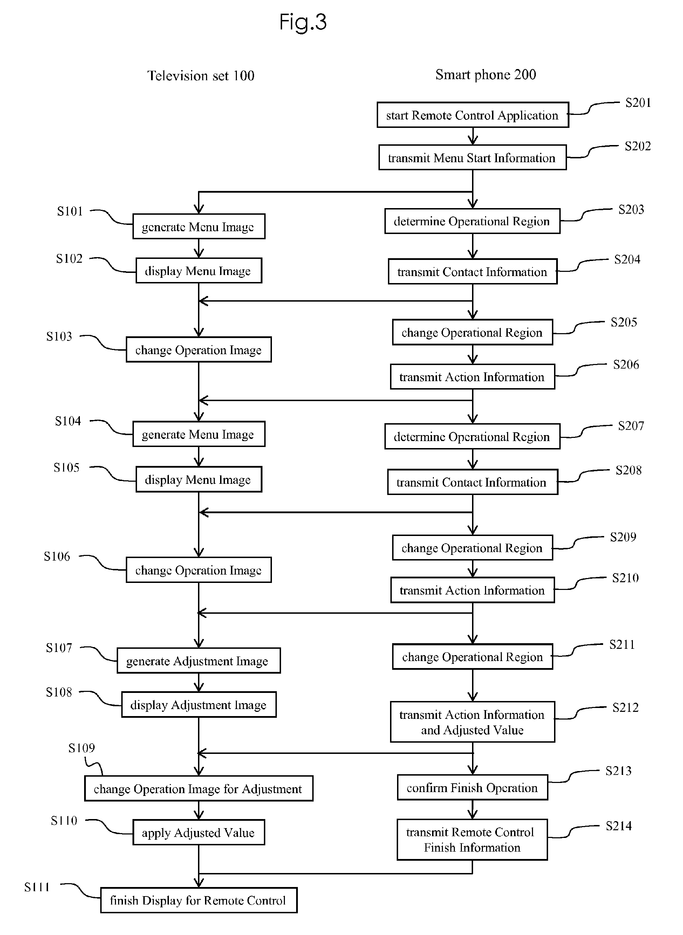

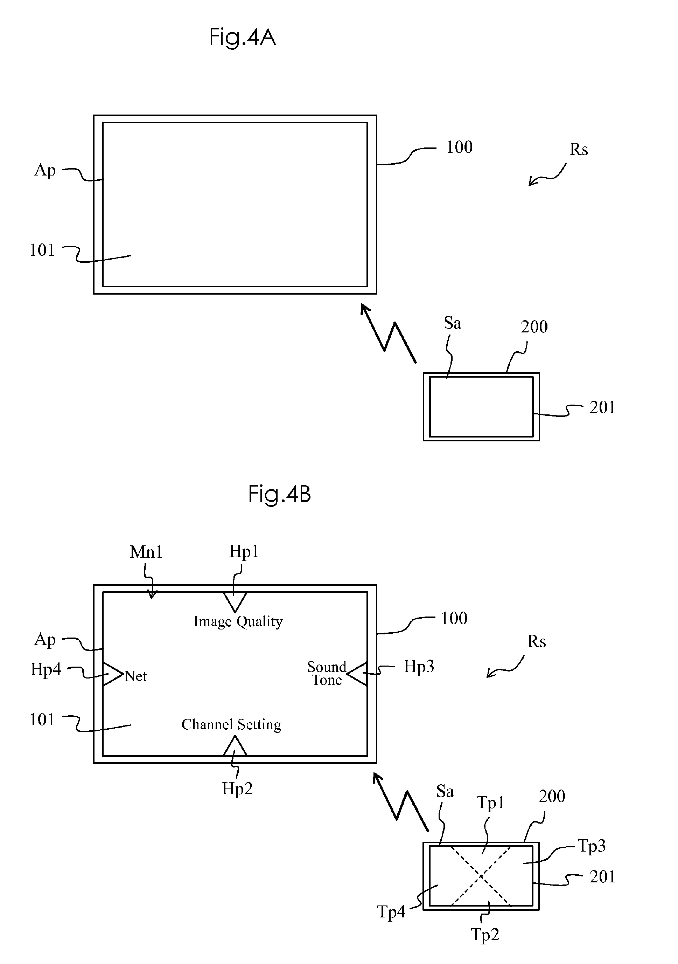

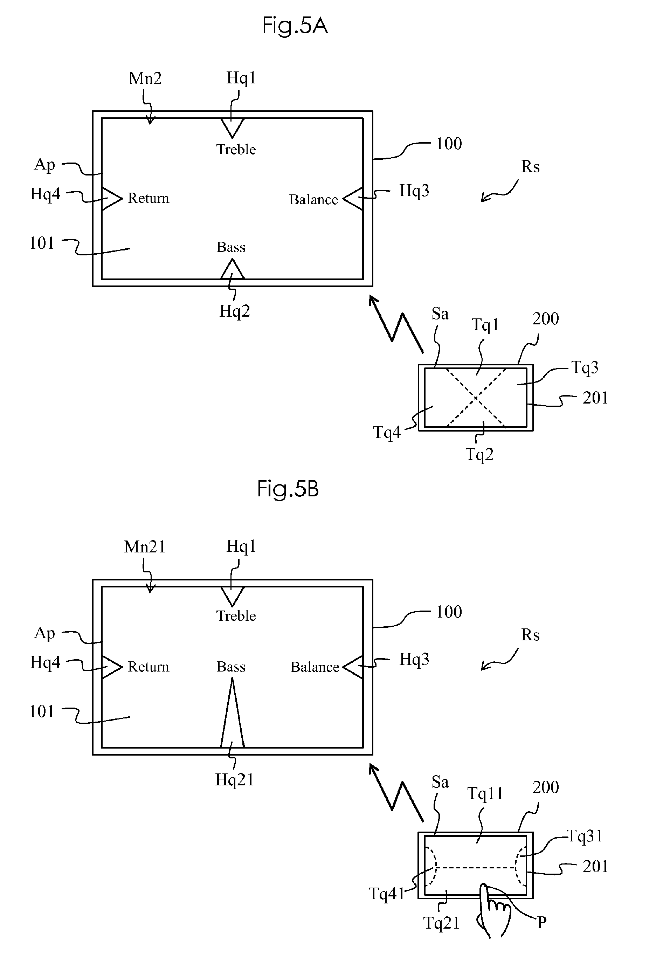

The remote control using the remote control system Rs as described above is described with reference to additional drawings. Fig. 3 is a flowchart illustrating an operation of a remote control system according to the present invention. In addition, Figs. 4A to 4D are diagrams illustrating the television set and the smart phone at timing in an early stage of the operation illustrated in Fig. 3, and Figs. 5A to 5D are diagrams illustrating the television set and the smart phone at timing in a later stage of the operation illustrated in Fig. 3.

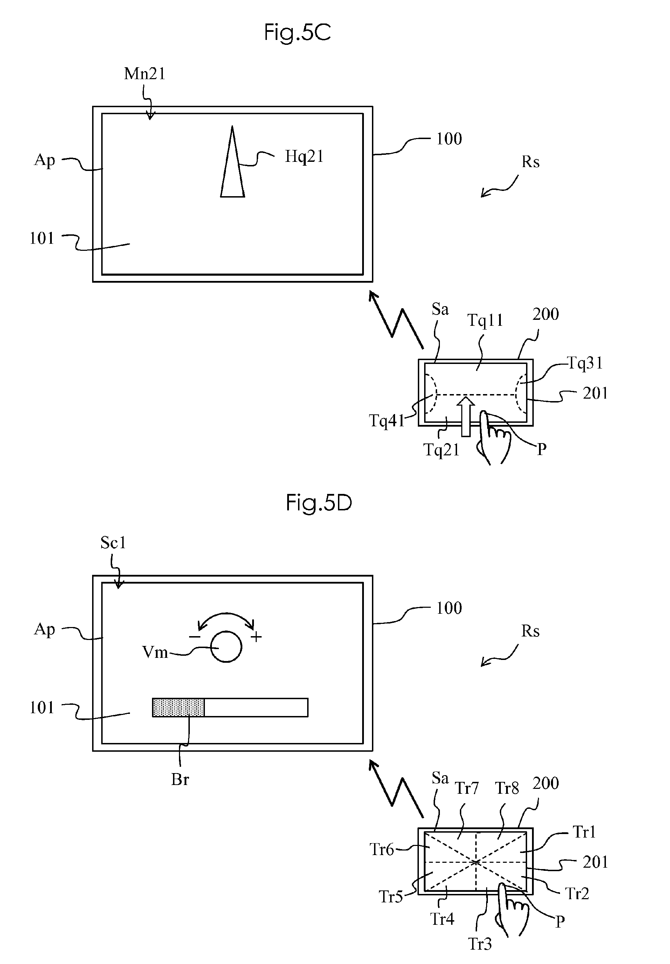

Fig. 3 illustrates operation procedures of the television set 100 as the image display apparatus and the smart phone 200 as the external control device in parallel, and indicates that signals are transmitted and received between the television set 100 and the smart phone 200. The flowchart illustrated in Fig. 3 illustrates an operation for adjusting the bass of the sound output from the television set 100. In this case, the display panel 101 of the television set 100, at first, displays a menu Mn1 (see Fig. 4B) indicating the entire operation, and afterwards displays a detailed menu image Mn2 for sound tone (see Fig. 5A). After that, an adjustment image Sc1 for adjusting the bass (see Fig. 5D) is displayed. In addition, the smart phone 200 is operated by the operator at timing, and a wireless signal is transmitted from the smart phone 200.

As illustrated in Fig. 4A, the television set 100 and the smart phone 200 are used independently. At first, the remote control system Rs starts operation based on an instruction from the smart phone 200. As illustrated in Fig. 3, the operator operates the smart phone 200 so that an operation for starting remote control of the television set 100 (for example, start of an application for the remote control) is performed (Fig. 3, Step S201). The CPU 202 transmits menu start information for starting the operation display image (here, the menu image Mn1) from the connection unit 204 to the display panel 101 (Step S202).

The connection unit 108 receives the menu start information and sends the signal to the command decoder 104. A command of the menu start information is sent to the operation image generator 105. The operation image generator 105 generates the menu image Mn1 based on menu information contained in the menu start information (Step S101). Then, the operation image generator 105 sends the menu image Mn1 as the image signal to the signal mixer 106. The signal mixer 106 transmits the image signal of the menu image Mn1, and the menu image Mn1 is displayed on the display panel 101 (Step S102).

Here, the menu image Mn1 is described. As illustrated in Fig. 4B, in the menu image Mn1, total four operation images Hp1, Hp2, Hp3, and Hp4 are respectively disposed on four sides of a landscape rectangular display region Ap. Different operations are respectively assigned to the operation images Hp1, Hp2, Hp3, and Hp4. In the menu image Mn1, the operation images Hp1, Hp2, Hp3, and Hp4 are equilateral triangles having the same size (the same shape), but this is not a limitation. The operation images Hp1, Hp2, Hp3, and Hp4 may have different shapes or sizes. In addition, the operation images may have different shapes or sizes from each other.

A specific example of the menu image Mn1 is as follows. The operation image Hp1 is a triangular image disposed in the middle of the upper long side, and an operation for opening a detailed menu image of "image quality" (for changing a menu layer) is assigned to the operation image Hp1. The operation image Hp2 is a triangular image disposed in the middle of the lower long side, and an operation for opening a detailed menu image of "channel setting" is assigned to the operation image Hp2. The operation image Hp3 is a triangular image disposed in the middle of the right short side, and an operation for opening a detailed menu image of "sound tone" is assigned to the operation image Hp3. The operation image Hp4 is a triangular image disposed in the middle of the left short side, and an operation for opening a detailed menu image about "the Internet (NET)" is assigned to the operation image Hp4.

As illustrated in Fig. 4B, in the smart phone 200, a detection region Sa of the touch panel 201 is divided into operational regions Tp1, Tp2, Tp3, and Tp4 so as to correspond to the operation images in the menu image Mn1 (Step S203). Four sides of the detection region Sa of the touch panel 201 correspond to four sides of the display region Ap of the display panel 101. In addition, broken lines illustrated in Fig. 4B are imaginary lines dividing the detection region Sa of the touch panel 201 into the operational regions Tp1, Tp2, Tp3, and Tp4. Although the broken lines are not actually displayed, it is possible to actually display them.

Further, the operational region Tp1 is set to include a part corresponding to the part in which the operation image Hp1 is disposed, namely the middle part of the upper long side. Similarly, the operational region Tp2 is set to includes a part corresponding to the part in which the operation image Hp2 is disposed, the operational region Tp3 is set to includes a part corresponding to the part in which the operation image Hp3 is disposed, and the operational region Tp4 is set to includes a part corresponding to the part in which the operation image Hp4 is disposed.

The operator performs operation of the smart phone 200 while viewing the display panel 101 of the television set 100. Because the display region Ap in the display panel 101 corresponds to the detection region Sa of the touch panel 201, the operator can easily cause the pointer P to contact with the operational region corresponding to the operation image assigned to a desired operation without viewing the touch panel 201. Note that in this embodiment, an operation for adjusting sound tone is displayed. Therefore, the operator can cause the pointer P to contact with the operational region Tp3 corresponding to the operation image Hp3 on the touch panel 201 of the smart phone 200 while viewing the menu image Mn1 displayed on the display panel 101.

The operational regions Tp1, Tp2, Tp3, and Tp4 divide the middle part of the detection region Sa. By dividing in this way, it is possible to form operational regions having a certain degree of size around the part corresponding to the operation image, and hence it is possible to reduce misoperation when the operator operates the touch panel 201 without viewing the smart phone 200. Note that the dividing method is not limited to the above-mentioned method.

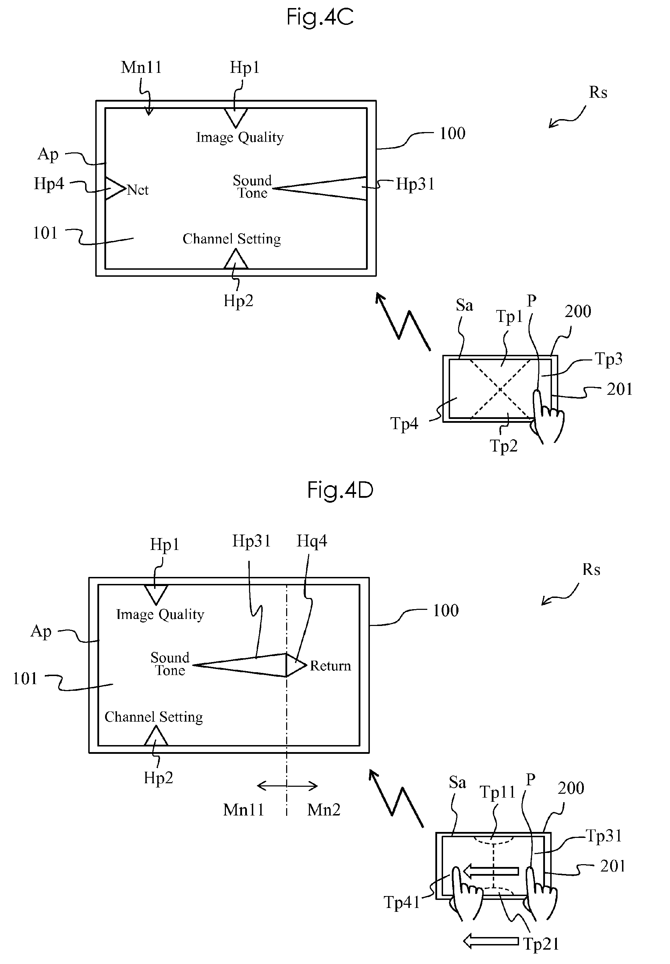

In the smart phone 200, when the touch panel 201 detects contact of the pointer P (here, an operator's finger), the contact position information is sent to the CPU 202. Then, the CPU 202 transmits the wireless signal containing information of the operational region contacted by the pointer P (the operational region Tp3 in Fig. 4C) as contact information from the connection unit 204 (Step S204).

In the television set 100, when the connection unit 108 receives the wireless signal containing the contact information, the signal is transmitted to the command decoder 104. The command decoder 104 transmits a command for changing the operation image to the operation image generator 105 based on the contact information. The operation image generator 105 changes the operation image Hp3 based on the command (based on the contact information of the pointer P with the operational region Tp3).

The operation image generator 105 generates a menu image Mn11 in which two sides of an operation image Hp31 are elongated to form an isosceles triangle as illustrated in Fig. 4C, and sends an image signal thereof to the signal mixer 106. The signal mixer 106 transmits the image signal of the menu image Mn11, and the display panel 101 displays the menu image Mn11 (Step S103). Note that the operation image generator 105 may generate the menu image Mn11 or may generate a difference between the menu image Mn1 and the menu image Mn11, namely only the operation image Hp31. In the structure in which only the difference is generated, it is needless to say that the signal mixer 106 can modify the menu image that is currently displayed. In addition, instead of deforming the operation image in this way, it is possible to adopt other changing methods such as changing a color of the operation image, blinking the operation image, deleting other operation images, by which the operator can intuitively know the operational region contacted by the pointer P, namely the current operation.

In this way, when the menu image Mn1 including the operation image Hp3 corresponding to the operational region Tp3 contacted by the pointer P is replaced by the menu image Mn11 including the operation image Hp31, the operator can recognize that the operation image Hp3 is deformed into the operation image Hp31. Thus, the operator can intuitively know that the "sound tone" is being operated (without misoperation) without viewing the smart phone 200.

Then, the menu image Mn11 indicates that the detailed menu image of the "sound tone" is displayed when moving in the direction indicated by the operation image Hp31. Therefore, it can be expected that the operator moves the pointer P to the left as the next operation. Then, the CPU 202 of the smart phone 200 recognizes to proceed to the next operation when the pointer P moves to the left. Then, in order to respond to the movement of the pointer P, the division of the operational region is changed as illustrated in Fig. 4D (Step S205).

Here, the changed operational region is described. The smart phone 200 determines that the operation input is performed when the boundary of the operational region touched by the pointer P (here, Tp3) is exceeded, namely when being moved to another operational region. In order to respond to the movement of the pointer P to the left, the CPU 202 divides the detection region Sa as illustrated in Fig. 4D.

In other words, as illustrated in Fig. 4D, the CPU 202 changes each of the upper and lower operational regions Tp11 and Tp21 to have a semi-oval shape disposed at the upper and lower sides of the detection region Sa. Further, operational regions Tp31 and Tp41 are halves of the remaining part of the detection region Sa divided at the center in the left and right direction.

The areas of the operational regions Tp11 and Tp21 are decreased, and the boundary line between the operational region Tp31 and the operational region Tp41 crosses the expected movement direction of the pointer P (see Fig. 4D). In this way, even if the moving operation of the pointer P by the operator is not correctly in the left and right direction (horizontal direction), or even if the smart phone 200 is shifted, it is possible to correctly recognize the movement exceeding the boundary from the operational region Tp31 to the operational region Tp41.

Further, because the operational regions Tp11 and Tp21 have a semi-oval shape, a boundary in the up and down direction between the regions is elongated in the horizontal direction (along the movement direction of the pointer P). Thus, it is easy to prevent the pointer P from entering the operational region Tp11 or Tp21 when the pointer P is moved in the lateral direction. In addition, without limiting to this shape, it is preferred to dispose the operational regions Tp11 and Tp21 so that the pointer P cannot easily exceed the boundary.

Note that it is possible to adopt a structure in which in synchronization with the moving operation of the pointer P, the menu image Mn11 changes so as to move with respect to the display region Ap. As such an action, for example, as illustrated in Fig. 4D, the operation images Hp1, Hp2, Hp31, and Hp4 are moved to the left along with the movement of the pointer P to the left direction. In this case, a part of the menu image Mn2 to be displayed next (here, an operation image Hq4) is displayed.

In the smart phone 200, when the pointer P is moved from the operational region Tp31 to the operational region Tp41, the touch panel 201 detects the moving operation of the pointer P. Then, the CPU 202 transmits the wireless signal containing contact action information of the pointer P and operation information to display the detailed menu of the "sound tone" from the connection unit 204 (Step S206).

In the television set 100, when the connection unit 108 receives the wireless signal including the contact action information, the signal is transmitted to the command decoder 104. The command decoder 104 transmits to the operation image generator 105 a command to change the menu image based on the contact action information. The operation image generator 105 generates detailed menu image Mn2 for "sound tone" as the operation display image based on the command (based on the information indicating the movement of the pointer P from the operational region Tp31 to the operational region Tp41) (Step S104). Then, the operation image generator 105 sends the menu image Mn2 as the image signal to the signal mixer 106. The signal mixer 106 transmits the image signal of the menu image Mn2, and the display panel 101 displays the menu image Mn2 (see Step S105 and Fig. 5A).

The menu image Mn2 illustrated in Fig. 5A is described. The menu image Mn2 is a menu image for specifying detailed setting for "sound tone". As illustrated in Fig. 5A, the menu image Mn2 has the same structure as the menu image Mn1. In other words, operation images Hq1, Hq2, Hq3, and Hq4 are disposed respectively at middle parts of four sides of the display region Ap. Note that the operation images Hq1 to Hq4 have the same shape as the operation images Hp1 to Hp4, namely equilateral triangles having the same size.

Further, in the menu image Mn2, the operation image Hq1 disposed at the middle part of the upper long side is assigned to an image display operation for treble adjustment. The operation image Hq2 disposed at the middle part of the lower long side is assigned to an image display operation for bass adjustment. The operation image Hq3 disposed at the middle part of the right short side is assigned to an image display operation for left and right balance adjustment of volume. Further, in the menu image Mn2, the operation image Hq4 disposed at the middle part of the left short side is assigned to an image display operation for returning to the former menu image Mn1.

As illustrated in Fig. 5A, in the smart phone 200, the detection region Sa of the touch panel 201 is divided into operational regions Tq1, Tq2, Tq3, and Tq4 so as to correspond to the operation images in the menu image Mn2 (Step S207). Because the menu image Mn2 has the same operation image arrangement as the menu image Mn1, the operational regions Tq1, Tq2, Tq3, and Tq4 have the same shape as the operational regions Tp1, Tp2, Tp3, and Tp4.

In this embodiment, in order to adjust the bass, the operator causes the pointer P to contact with the operational region Tq2 corresponding to the operation image Hq2 assigned to the bass adjustment, while viewing the menu image Mn2 displayed on the display panel 101.

In the smart phone 200, when the touch panel 201 detects contact of the pointer P, the contact position information is sent to the CPU 202. Then, the CPU 202 transmits the wireless signal containing information of the operational region contacted by the pointer P (the operational region Hq2 in Fig. 5A) as the contact information from the connection unit 204 (Step S208).

In the television set 100, when the connection unit 108 receives the wireless signal containing the contact information, the signal is transmitted to the command decoder 104. The command decoder 104 transmits a command for changing the operation image to the operation image generator 105 based on the contact information. The operation image generator 105 changes the operation image Hq2 based on the command (based on the contact information of the pointer P with the operational region Tq2).

As illustrated in Fig. 5B, a menu image Mn21 in which two sides of an operation image Hq21 are elongated to form an isosceles triangle is generated, and an image signal thereof is sent to the signal mixer 106. The signal mixer 106 transmits the image signal of the menu image Mn21, and the display panel 101 displays the menu image Mn21 (Step S106). Note that the action of the operation image generator 105 is the same as that when the menu image Mn11 described above is generated, and detailed description thereof is omitted.

Then, the CPU 202 of the smart phone 200 recognizes to proceed to the next operation when the pointer P is moved upward. Then, in order to respond to the movement of the pointer P, the division of the operational region is changed as illustrated in Fig. 5B (Step S209). The changing of the operational region is performed by the same method as described above. Because the pointer P is moved upward, the left and right operational regions Tq3 and Tq4 are changed respectively to operational regions Tq31 and Tq41 having a semi-oval shape disposed at the left and right sides of the detection region Sa. In addition, operational regions Tq11 and Tq21 are halves of the remaining part of the detection region Sa divided at the center in the up and down direction.

Note that it is possible to adopt a structure in which in synchronization with the moving operation of the pointer P, the menu image Mn21 changes so as to move with respect to the display region Ap. As such an action, for example, the operation images Hq1, Hq21, Hq3, and Hq4 are moved upward along with the upward movement of the pointer P as illustrated in Fig. 5C.

In the smart phone 200, when the pointer P is moved from the operational region Tq21 to the operational region Tq11, the touch panel 201 detects the moving operation of the pointer P. Then, the CPU 202 transmits the wireless signal containing the contact action information of the pointer P and the operation information to display the bass adjustment image from the connection unit 204 (Step S210).

In the television set 100, when the connection unit 108 receives the wireless signal including the contact action information, the signal is transmitted to the command decoder 104. The command decoder 104 transmits to the operation image generator 105 a command to change to the adjustment image based on the contact action information. The operation image generator 105 generates the adjustment image Sc1 as the operation display image based on the command (Step S107). Then, the operation image generator 105 sends the adjustment image Sc1 as the image signal to the signal mixer 106. The signal mixer 106 transmits the image signal of the adjustment image Sc1, and the display panel 101 displays the adjustment image Sc1 (see Step S108 and Fig. 5D).

Here, the adjustment image Sc1 is described. In the remote control system, in order to facilitate operator's intuitive operation, volume controller operation is simulated when performing the sound tone adjustment (bass output adjustment). Therefore, the adjustment image Sc1 includes a volume controller Vm and a bar graph Br indicating an output level of the bass. The volume controller Vm is accompanied with an arrow indicating a rotation direction and signs indicating increase and decrease directions of the adjusted value when rotating in the arrow directions. Note that the volume controller Vm may be displayed as necessary. In addition, the bar graph Br is displayed for visualizing the bass level. It is possible to configure to display a ratio of the bass level to a predetermined reference level, or to configure to display an actual bass value.

As illustrated in Fig. 5D, in order to detect rotation of the pointer P, the CPU 202 divides the detection region Sa of the touch panel 201 into eight operational regions Tr1 to Tr8 in the circumferential direction with respect to the center (Step S211). Note that the operational regions Tr1 to Tr8 as adjustment operational regions have boundaries including two diagonals of the detection region Sa, a line connecting centers of a pair of long sides, and a line connecting centers of a pair of short sides. Note that the division of the operational region is not limited to this. It is possible to divide so that the regions have the same central angle.

Further, when the operator moves the pointer P to rotate, the pointer P soon exceeds a boundary between operational regions. When the touch panel 201 detects that the pointer P moves from the currently contacted operational region to the next operational region, the CPU 202 obtains a rotation direction of the pointer P based on the information thereof. Then, the CPU 202 transmits the contact action information containing the rotation direction of the pointer P and the bass adjustment amount (operation information) as the wireless signal via the connection unit 204 (Step S212).

In the television set 100, when the connection unit 108 receives the wireless signal containing the action information and the adjustment amount information, the signal is transmitted to the command decoder 104. The command decoder 104 transmits a command to change the adjustment image to the operation image generator 105 based on operation amount information. The operation image generator 105 changes the volume controller Vm and the bar graph Br based on the received command (Step S109).

In addition, the command decoder 104 extracts an execution instruction (to instruct the bass adjustment amount) from the operation information, and transmits an execution instruction to adjust a bass component to a sound controller (not shown) for controlling sound output in accordance with the instruction from the CPU 103 (Step S110).

Further, every time when the operational region contacted by the pointer P moves to the next region, the smart phone 200 transmits the contact action information containing the rotation direction described above and the operation information as the wireless signal from the connection unit 204. Then, every time when the television set 100 receives the information, the television set 100 changes the image of the volume controller Vm and the bar graph Br in the adjustment image Sc1 to be displayed on the display panel 101. Further, at the same time, adjustment of each portion (here, the bass adjustment of the sound output), namely application of the adjustment amount is performed.

In this way, the change of the adjustment image Sc1 and the application of the adjustment amount are performed instantaneously (in real time) to the operation by the operator. Thus, the operator can check the adjusted state of the television set 101 while performing the operation, and therefore the operator can perform the adjustment intuitively and correctly.

Further, when the adjustment operation is finished, the smart phone 200 checks a finish operation of the adjustment operation (remote control). Note that in this example, the finish operation of the adjustment operation is to press (long press) the detection region Sa of the touch panel 201 with the pointer P for a predetermined time (for example, 3 seconds). When the CPU 202 checks that the above-mentioned finish operation is input from the touch panel 201 (Step S213), the CPU 202 transmits remote control finish information as the wireless signal from the connection unit 204. Note that when the smart phone 200 recognizes remote control finish input, the CPU 202 finishes the application for remote control so as to finish the remote control (step S214).

In addition, when the connection unit 108 receives the wireless signal containing the remote control finish information in the television set 100, the signal is transmitted to the command decoder 104. The command decoder 104 extracts a command to finish the remote control, transmits the command to the signal mixer 106, and finishes the display of the image for remote control on the display panel 101 (Step S111).

As described above, using the remote control system, the operator can operate the touch panel 201 of the smart phone 200 while keeping sight of the display panel 101 or substantially without taking eyes from the display panel 101, so as to appropriately perform remote control of the television set 100. In addition, because the operation display image (display region Ap) on the display panel 101 corresponds to the detection region Sa of the smart phone 200, it is possible to provide the operator with intuitive, namely, easy operation remote control method. Further, the touch panel 201 of the smart phone 200 is provided with the operational regions, and the operation is performed when the operational region is changed (the boundary is exceeded). Therefore, even if the operator misoperates the pointer P, the execution instruction is not issued promptly, and hence it is possible to correct the operation. In this way, usability in operation by the operator can be improved.

Note that if the external control device is a device such as the smart phone 200 including the CPU 202, the memory 203, and the like, it is possible to use it as the external control device for remote control by loading a program (application) for remote control. Note that it is possible to use a device as the external control device, which can execute a predetermined operation by executing a program and can communicate signal with the image display apparatus via wired or wireless.

In addition, when using the smart phone 200 including the touch panel 201 integrated with the image display unit as the external control device, the operator may seldom look at the smart phone 200, and hence image display on the smart phone 200 can be omitted. In this way, power consumption in the image display unit can be reduced. Alternatively, an image of small power consumption and the boundary line between the operational regions may be displayed. In this way, usability for the operator can be improved while reducing power consumption of the smart phone 200. The image and the boundary line may be always displayed or may be displayed in response to an operator's request or for a predetermined time from a predetermined operation (for example, recognition of contact of the pointer).

### (Second embodiment)

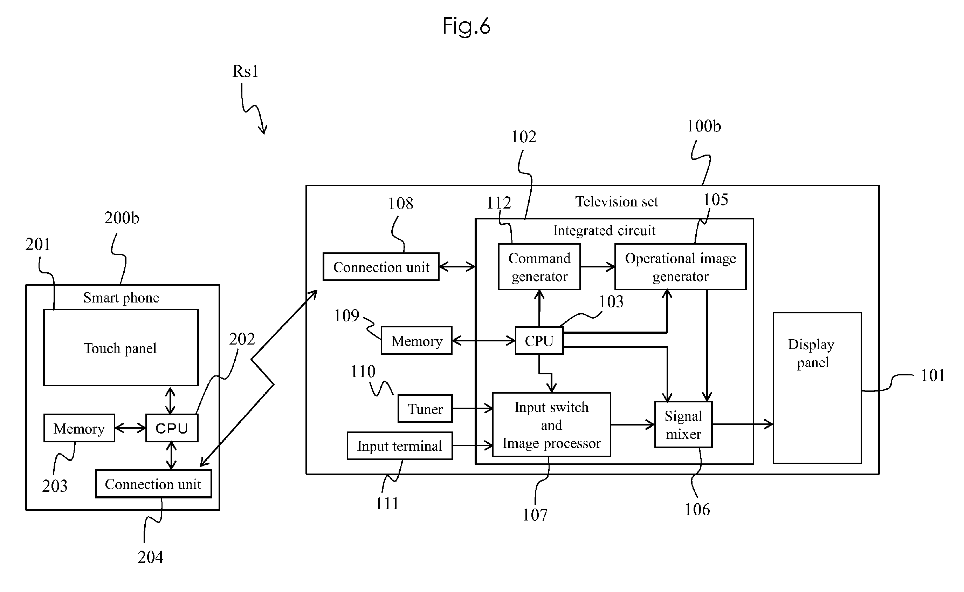

Another example of the remote control system according to the present invention is described with reference to the drawings. Fig. 6 is a block diagram illustrating an example of a remote control system for remote control of the image display apparatus. A schematic structure of the remote control system illustrated in Fig. 6 is the same as the remote control system Rs illustrated in Fig. 2, and the substantially same part is denoted by the same numeral or symbol so that detailed description of the substantially same part is omitted.

A remote control system Rs1 illustrated in Fig. 6 includes a television set 100b and a smart phone 200b. As illustrated in Fig. 6, the television set 100b includes a command generator 112 instead of the command decoder 104, and other structure is the same as that of the television set 100.

In the remote control system Rs of the first embodiment, the smart phone 200 sends the information (operation information in the above description) for operation (remote control) of the television set 100 and the contact action information of the pointer P on the touch panel 201. In contrast, in the remote control system Rs1 of this embodiment, the smart phone 200b sends only the contact action information of the pointer P (information of the contacted operational region and the movement information) to the television set 100b. In other words, the smart phone 200b has the same structure as the smart phone 200 but has less information to be transmitted.

The CPU 103 of the television set 100b always obtains the operation image included in the operation display image generated by the operation image generator 105 and operation information of the television set 100b assigned to the operation image. Further, when obtaining the contact action information of the pointer P from the smart phone 200b, the CPU 103 instructs the command generator 112 to generate the execution instruction (signal) from the contact action information and the operation information of the television set 100b assigned to the operation image.

For instance, if the operation image corresponding to the operational region contacted by the pointer P is changed to the next operation display image (proceeds to a menu image of the next layer), the command generator 112 sends a command to generate a corresponding operation display image to the operation image generator 105. In addition, if the operation image corresponding to the operational region contacted by the pointer P is assigned to adjustment/change of the television set 100 (for example, image adjustment, channel change, or the like), the command generator 112 generates a command to operate a corresponding portion and transmits the command to the portion.

As described above, in the remote control system Rs1, the signal transmitted from the smart phone 200b contains only the contact action information of the pointer P, and hence the information amount is small. Therefore, even if the line connecting the connection units (regardless of wired or wireless) is a narrow band, the operator can intuitively operate the television set 100b without feeling a stress. In addition, the information transmitted from the smart phone 200b contains only the positional information of the pointer P, it is not necessary to transmit and receive complicated information. Therefore, even if the external control device (here, the smart phone 200b) has different specification, the same operation can be performed. Further, because the information to be transmitted is simple, it is possible to reduce effort and time to create the application. Note that other feature is the same as that of the first embodiment.

### (Third embodiment)

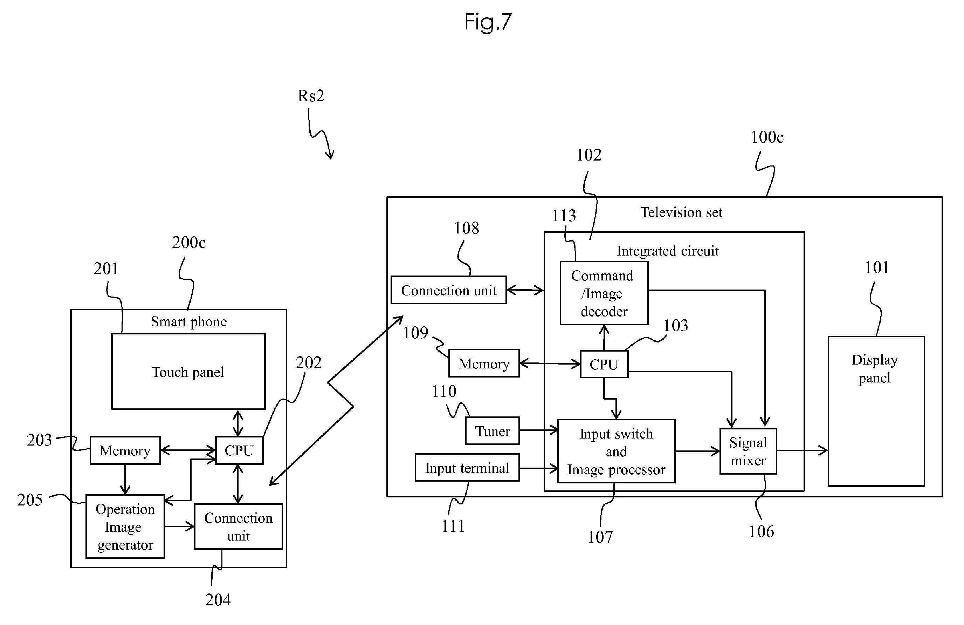

Another example of the remote control system according to the present invention is described with reference to the drawings. Fig. 7 is a block diagram illustrating an example of the remote control system for remote control of the image display apparatus. The schematic structure of a remote control system Rs2 illustrated in Fig. 7 is the same as the remote control system Rs illustrated in Fig. 1.

The remote control system Rs2 includes a television set 100c as the image display apparatus and a smart phone 200c as the external control device. Connection between the television set 100c and the smart phone 200c is performed by the connection method in which the operation information and the operation display image information are transmitted. In other words, the operation information and the operation display information are transmitted from the smart phone 200c to the television set 100c. Note that a wireless connection method such as Miracast (registered trademark) for communicating image information signal is used as this connection method.

As illustrated in Fig. 7, in the remote control system Rs2, the television set 100c includes a command/image decoder 113 inside the integrated circuit 102, and the operation image generator 105 is eliminated. In this way, the command/image decoder 113 is connected to the signal mixer 106. Other than this, the television set 100c has the same structure as the television set 100, and the substantially same portion is denoted by the same numeral or symbol.

In addition, as illustrated in Fig. 7, in the remote control system Rs2, the smart phone 200c includes an operation image generator 205. The operation image generator 205 generates the operation display image to be displayed on the display panel 101 of the television set 100 in accordance with an instruction from the CPU 202. The operation image generator 205 is connected to the CPU 202, the memory 203, and the connection unit 204. Other than this, the smart phone 200c has the same structure as the smart phone 200, and the substantially same portion is denoted by the same numeral or symbol. Note that the operation image generator 205 may be provided as a dedicated circuit, or may be provided as a program to be executed by the CPU 202 or a processor disposed for program processing.

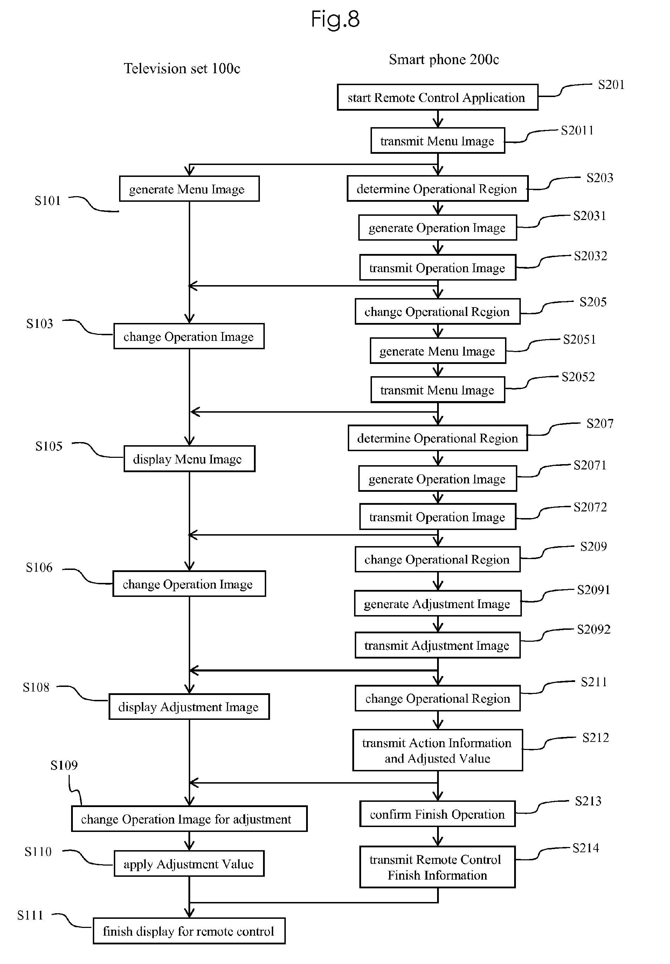

An operation of this remote control system Rs2 is described with reference to the drawings. Fig. 8 is a flowchart illustrating an operation of the remote control system illustrated in Fig. 7. Similarly to Fig. 3, Fig. 8 illustrates the operation procedures of the television set 100c as the image display apparatus and the smart phone 200c as the external control device in parallel, and indicates that signals are transmitted and received between the television set 100c and the smart phone 200c. Note that the flowchart illustrated in Fig. 8 illustrates an operation procedure for adjusting the bass of the sound tone similarly to the flowchart illustrated in Fig. 3.

In the flowchart illustrated in Fig. 8, in the remote control system Rs2, the television set 100c displays image information of the operation display image transmitted from the smart phone 200c on the display panel 101. The display of the menu image (Steps S102 and S105), the change of the operation image (Steps S103 and S106), the display of the adjustment image (Step S108), the change of the adjustment image (Step S109), the application of the adjusted value (Step S110), and the finishing of the remote control display (Step S111) illustrated in Fig. 8 are the same as those illustrated in Fig. 3.

In the smart phone 200c, when the remote control application is started (Step S201), the CPU 202 controls the operation image generator 205 to generate the menu image Mn1 (Fig. 4C). Then, the CPU 202 transmits the menu image information as the wireless signal via the connection unit 204 (Step S2011). In this case, the CPU 202 simultaneously transmits the operation information for displaying the menu image Mn1 on the display panel 101.

When the television set 100c receives the wireless signal by the connection unit 108, the television set 100c sends the received signal to the command/image decoder 113. The command/image decoder 113 extracts (decodes) the image information of the menu image Mn1 and the execution instruction (command) to display the image on the display panel 101 from the received signal. The signal containing the image information of the menu image Mn1 is sent to the signal mixer 106. In addition, the execution instruction is sent to the signal mixer 106, and the menu image Mn1 is displayed on the display panel 101 (step S102).

In addition, in the smart phone 200c, the step of determining the operational region (Step S203) is the same as that in the flowchart illustrated in Fig. 3. In the smart phone 200c, when the touch panel 201 detects a contact action of the pointer P, the operation image Hp31 (Fig. 4D) associated to the contact action of the pointer P is generated by the operation image generator 205 (Step S2031). The generation of the operation display image, which is performed by the television set 100 in the remote control system Rs, is performed by the smart phone 200c in the remote control system Rs2. Further, the CPU 202 transmits the operation image Hp31 generated by the connection unit 204 (Step S2032).

The remote control system Rs2 is different from the remote control system Rs in that generation and transmission of the image are performed by the smart phone 200c. Further, in the smart phone 200c, every time when the touch panel 201 detects the contact/action of the pointer P after that, the operation image, the menu image, or the adjustment image is generated by the operation image generator 205 (Steps S2051, S2071, and S2091). Then, the generated image is transmitted as the wireless signal from the connection unit 204 (Steps S2052, S2072, and S2092).

As described above, the external control device generates the operation display image, which is displayed on the display unit of the image display apparatus. Therefore, it is possible to perform remote control of even the image display apparatus that does not include the operation image generator. In this way, it is possible to increase combinations of the external control device capable of remote control and the image display apparatus, and hence versatility of the remote control method and the remote control program (application) can be enhanced. Note that other features are the same as those in the first embodiment and in the second embodiment.

### (Other embodiment)

In the above-mentioned embodiment, the operational regions are formed on the detection region of the detection unit of the external control device (touch panel of the smart phone), so as to have the same center angle at the center of the touch panel and to respectively include positions corresponding to the operation images in the operation display image. This division method of the operational regions is not a limitation.

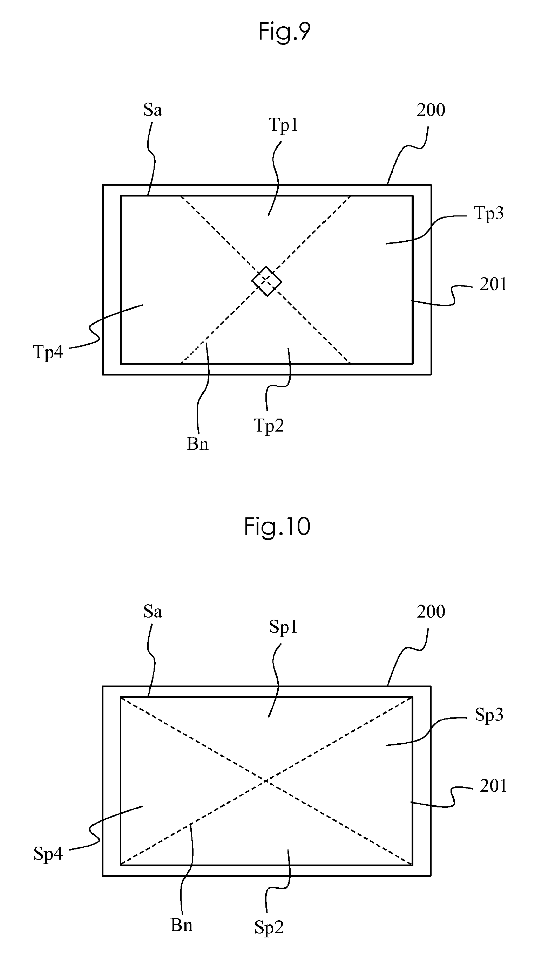

Hereinafter, patterns of the operational regions are described with reference to the drawings. Fig. 9 is a diagram illustrating an example of the operational region. Fig. 10 is a diagram illustrating another example of the operational regions. Note that Fig. 9 and Fig. 10 illustrate states where the smart phone 200 illustrated in Fig. 2 is viewed from front. Fig. 9 and Fig. 10 illustrate operational regions in the state where the menu image Mn1 illustrated in Fig. 4B including operation images assigned to actions disposed at middle parts of four sides is displayed on the display panel 101. In addition, as described above, the boundary lines are not actually displayed on the image display unit of the smart phone 200. The boundary lines in Fig. 9 and Fig. 10 are imaginary boundary lines.

As illustrated in Fig. 9, the detection region Sa of the touch panel 201 of the smart phone 200 is divided into four operational regions Tp1, Tp2, Tp3, and Tp4 by four boundary lines Bn. The operational regions Tp1 to Tp4 are set by dividing the detection region Sa around the center to have the same center angle (90° because of division into four) so as to respectively include parts corresponding to the operation images Hp1 to Hp4 in the menu image Mn1.

In addition, it is possible to divide into operational regions Sp1 to Sp4 as the smart phone 200 illustrated in Fig. 10. The operational regions Sp1 to Sp4 are set to have the same area. Note that in the smart phone 200 illustrated in Fig. 10, diagonals of the detection region Sa are dividing lines Bn as division into four. As described above, because the dividing line Bn is set to pass the center of the detection region Sa, it is easy to set the operational regions.

When the operational region is divided by the boundary lines Bn passing the center of the detection region Sa, because there may be an odd number of the operation images or the number of the operation images is not a multiple of the number of sides of the detection region Sa, it is preferred to divide to have the same center angle so that the operator can intuitively understand the divided shape.

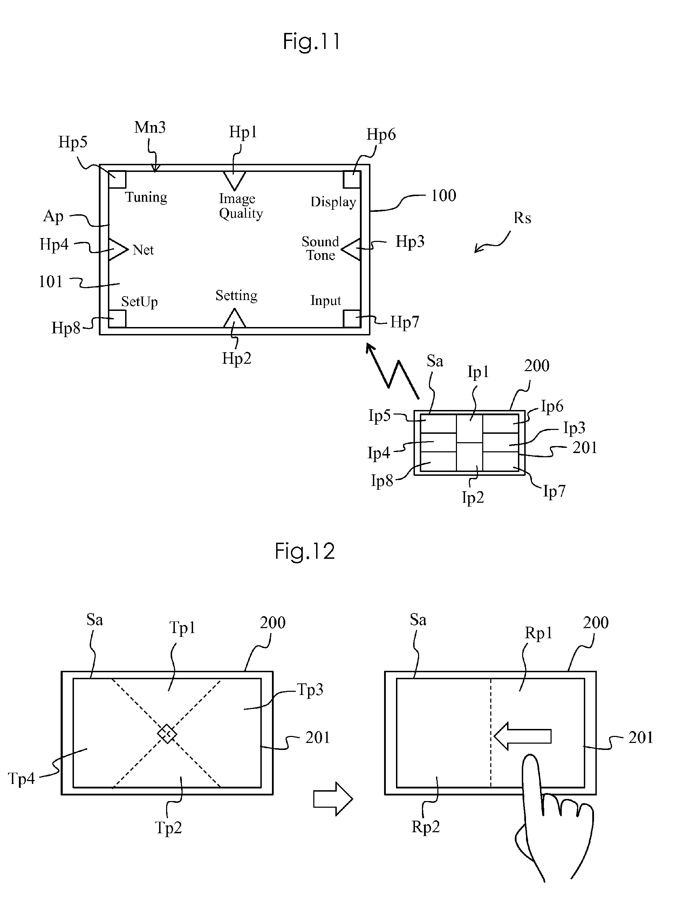

Still another example of the division pattern of the operational regions is described with reference to the drawings. Fig. 11 is a diagram illustrating still another example of the operational region. Fig. 11 illustrates the television set 100 and the smart phone 200, and a menu image Mn3 is displayed on the display panel 101 of the television set 100.

As illustrated in Fig. 11, the menu image Mn3 illustrated in display panel 101 includes operation images Hp1 to Hp8 disposed at four corners and at middle parts of four sides of the display region Ap. In this structure, if the detection region Sa is divided by boundary lines passing the center of detection region Sa, each operational region has a triangular shape having a small center angle, and interval between neighboring boundary lines is small. This means that the operational region to be contacted by the pointer P is substantially narrow so that it may be difficult for the operator to cause the pointer P to contact with a correct operational region.

Therefore, as the smart phone 200 illustrated in Fig. 11, it is possible to form operational regions Ip1 to Ip8 in a tile arrangement so as to respectively include the parts corresponding to the operation images Hp1 to Hp8 of the detection region Sa. In this arrangement, it is possible to secure a certain width of interval between neighboring boundary lines of the operational regions Ip1 to Ip8. In this way, the operator can cause the pointer P to correctly contact with the operational region corresponding to the operation image without viewing the smart phone 200 and to correctly perform the moving operation of the pointer P. Note that Fig. 11 illustrates an example of the tile arrangement of the operational regions, and this is not a limitation. The rectangular shape of the operational region is also not a limitation.

Next, change of the operational region when the touch panel 201 detects contact of the pointer P is described. In the embodiment described above, there is described an example where the operational regions that are not related to the next operation of the pointer P are changed to a semi-oval shape (for example, see Fig. 4D and Fig. 5C). Here, operation detection of the pointer P by the CPU 202 of the smart phone 200 is described. The CPU 202 recognizes that the operation input is performed when the pointer P is moved from the current contact operational region to another operational region. Therefore, the change of the operational region as the above-described embodiment is not essential. In other words, without changing the shape of the operational region, the pointer P is moved to another operational region when the pointer P is operated. However, if the operational region is not changed, the position of the pointer P when the pointer P exceeds a boundary between operational regions is not stable. As a result, the operator may feel incongruity because recognition of the operation input changes every time when the operation is performed. Therefore, it is preferred to change the operational region so that the operation input is detected at a position where a relative positional relationship between the pointer P and the detection region Sa (smart phone 200) is substantially the same.

Therefore, it is possible to adopt the operational regions as illustrated in Fig. 12. Fig. 12 is a diagram illustrating a state where the operational region is changed to detect the operation input of the pointer. Fig. 12 illustrates the smart phone 200 having the operational regions Tp1 to Tp4 illustrated in Fig. 9 as the operational regions when the pointer P contacts, and the smart phone 200 having operational regions Rp1 and Rp2 changed after the contact of the pointer P.

The operator causes pointer P to contact with the touch panel 201 of the smart phone 200, and then moves the pointer P. As illustrated in Fig. 12, when the pointer P contacts with the operational region Tp3, the operator recognizes the operation to be performed next from the change of the operation image on the display panel 101. Further, the next operation is limited. In this example, it is limited to the movement to the left. Therefore, the CPU 202 divides the detection region Sa in the movement direction of the pointer P into two operational regions Rp1 and Rp2. In this way, the operational regions in the up and down direction in the diagram are eliminated. Therefore, even if the movement direction of the pointer P in the detection region Sa is relatively shifted upward or downward in the diagram, the position of moving from the operational region Rp1 to the operational region Rp2 is substantially the same position. In other words, the operator can perform the operation input of the touch panel 201 with a constant operation sense, and hence the remote control can be performed intuitively and correctly.

In addition, it is possible to configure to recognize the action assigned to the operation image corresponding to the operational region when the pointer P contacts with one of the operational regions, and after that to detect the movement of the pointer P so as to detect the operation input. In this case, detection of the movement of the pointer P may be performed based on a relative movement amount of the pointer P or may be performed based on a movement speed of the pointer P. With this structure, it is not necessary to change to the operational region when the pointer P moves. In this case, the CPU 202 may eliminate the operational region or may detect only the movement of the pointer P while maintaining the division of the operational region.

Further, the operation of the remote control system is described in more detail. As illustrated in Fig. 1 and the like, the touch panel 201 of the external control device such as the smart phone 200 usually has a rectangular shape. Further, the smart phone 200 can be used in portrait or landscape. Therefore, a relationship between the display region and the detection region when the smart phone is changed between portrait and landscape is described with reference to the drawing.

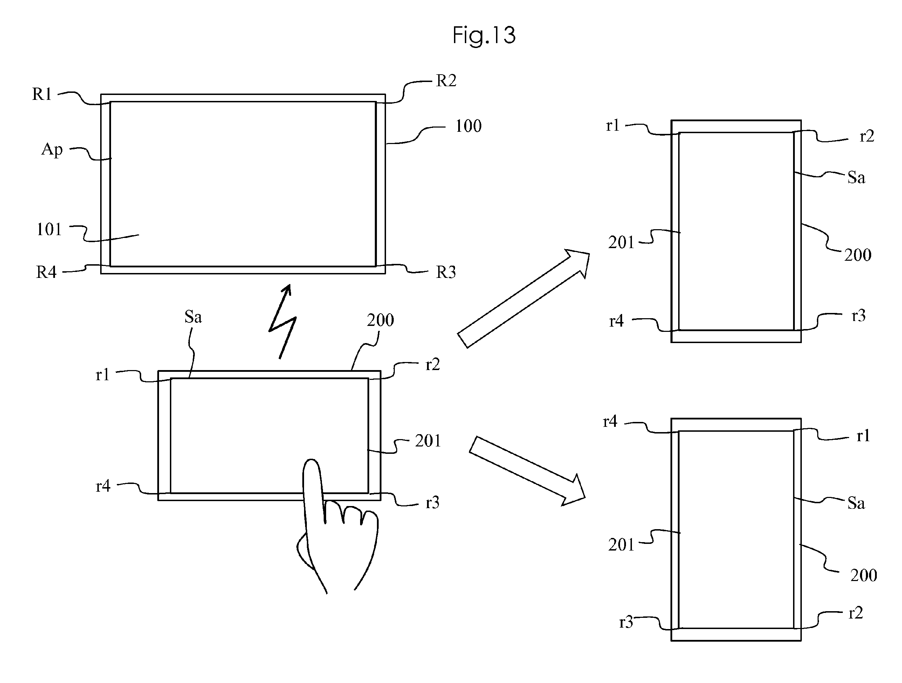

Fig. 13 is a diagram illustrating association between the display unit and the detection unit when the smart phone is changed between portrait and landscape. Fig. 13 illustrates the display panel 101 of the television set 100 and the smart phone 200 in landscape as well as the smart phone 200 in portrait. Further, symbols R1 to R4 respectively denote four corners of the display region Ap of the display panel 101 in the clockwise direction from the upper left corner, and symbols r1 to r4 respectively denote four corners of the touch panel 201 corresponding to the corners R1 to R4 in the diagram.

In the remote control system, in order to perform intuitive operation, the touch panel 201 of the smart phone 200 is usually used in the same shape position as the display panel 101 of the television set 100. In other words, the smart phone 200 is used in landscape, in which the upper left corner r1 of the detection region Sa of the touch panel 201 corresponds to the corner R1 of the display panel 101, and other three corners are denoted by r2, r3, and r4 in the clockwise direction.

On the other hand, the smart phone 200 may be used in portrait. In this case, although the shape position is not the same, it is preferred for the operator to set in the same up, down, left, and right direction. In other words, when the smart phone 200 is in portrait, the upper left corner r1 of the detection region Sa of the touch panel 201 corresponds to the corner R1 of the display region Ap of the display panel 101, and other three corners are denoted by r2, r3, and r4 in the clockwise direction. With this setting, although an operation length of the pointer P is different from the display panel 101, an operation direction of the pointer P is the same for intuitive operation.

On the other hand, there may be a case where the operator lies or is in a position inclined to the display panel 101 and views the display panel 101 with an inclined angle. In this case, even if the smart phone 200 is held in landscape viewed from the operator, it is preferred to associate the shape of the display region Ap of the display panel 101 with the shape of the detection region Sa of the touch panel 201 to be the same shape. In this case, for example, when the smart phone 200 in portrait, the upper right corner r1 of the detection region Sa corresponds to the corner R1 of the display region Ap of the display panel 101, and other three corners are denoted by r2, r3, and r4 in the clockwise direction.

As described above, in accordance with the position of the smart phone 200, the detection region Sa of the touch panel 201 is appropriately associated with the display region Ap of the display panel 101, so as to aid the operation input by the operator. Thus, the operator can perform intuitive and correct operation.

The remote control method of the present invention may be incorporated in the image display apparatus and the external control device as described above, or may be provided as a program to be installed in the image display apparatus and/or the external control device.

Although embodiments of the present invention are described above, the present invention is not limited to the embodiments. In addition, the embodiments of the present invention can be modified variously without deviating from the spirit of the invention.

## Claims

1. A remote control method for controlling an image display apparatus including a display unit for displaying an image by using an external control device including a panel detection unit for detecting contact of an object, **characterized in that** the method includes the steps of:
connecting the image display apparatus with the external control device, so as to associate a display region of the display unit with a detection region of the detection unit;
displaying an operation image associated with an operation of the image display apparatus on the display unit; and
executing the operation associated with the operation image displayed in the display region corresponding to a region in which contact of the object is detected when the contact of the object is detected by the detection unit.

2. The remote control method according to claim 1, **characterized in that**
the detection region includes an operational region corresponding to the operation image, and
when the object contacting with the detection unit exceeds a boundary of the operational region, the operation associated with the operation image is performed in accordance with the action of the object.

3. The remote control method according to claim 2, further include the steps of:
estimating an action of the contact object based on the operational region in which a contact action of the contact object is detected and the operation associated with the corresponding operation image; and
changing a shape of the operational region based on a result of the estimation.

4. The remote control method according to any one of claims 1 to 3, **characterized in that** when contact of the object is detected, the operation image of the display unit is changed.

5. The remote control method according to any one of claims 1 to 4, **characterized in that**
the display unit displays a plurality of the operation images, and
the detection region is divided into a plurality of operational regions corresponding to the operation images one to one.

6. The remote control method according to any one of claims 1 to 4, **characterized in that**
the detection region is divided into a plurality of operational regions, and
when it is detected that the operational region in which contact of the object is detected is changed, one of changing of the operation display image, starting of the remote control, and finishing the remote control is performed.

7. A remote control system for controlling an image display apparatus including a display unit for displaying an image by using an external control device including a panel detection unit for detecting contact of an object, **characterized in that**
the external control device is connected with the image display apparatus, so as to associate a display region of the display unit with a detection region of the detection unit, an operation image associated with an operation of the image display apparatus is displayed on the display unit, and the operation associated with the operation image displayed in the display region corresponding to a region in which contact of the object is detected is executed when the contact of the object is detected by the detection unit.

8. The remote control system according to claim 7, **characterized in that**
the detection region includes an operational region corresponding to the operation image, and
when it is detected that the object contacting with the detection unit exceeds a boundary of the operational region, the operation associated with the operation image is performed in accordance with the action of the object.

9. The remote control system according to claim 8, **characterized in that** an action of the contact object is estimated based on the operational region in which a contact action of the contact object is detected and the operation associated with the corresponding operation image, and a shape of the operational region is changed based on a result of the estimation.

10. The remote control system according to any one of claims 7 to 9, **characterized in that** when contact of the object is detected, the operation image of the display unit is changed.

11. The remote control system according to any one of claims 7 to 10, **characterized in that**
a plurality of the operation images are displayed on the display unit, and
the detection region is divided into a plurality of operational regions corresponding to the operation images one to one.

12. The remote control system according to any one of claims 7 to 10, **characterized in that**
the detection region is divided into a plurality of operational regions, and
when it is detected that the operational region in which contact of the object is detected is changed, one of changing of the operation display image, starting of the remote control, and finishing the remote control is performed.
